# EUROPEAN PATENT SPECIFICATION

(11) **EP 4 166 266 B1**
(45) Date of publication and mention of the grant of the patent: **22.05.2024**
(21) Application number: 22199342.1
(22) Date of filing: 03.10.2022
(51) Int. Cl.: B23K 9/04, B23K 31/10, B23K 37/00, B22F 10/22, B33Y 10/00, B33Y 40/00, B23K 101/04, B23K 101/00

(54) **LAMINATE SHAPING METHOD**
LAMINATFORMUNGSVERFAHREN
PROCÉDÉ DE FAÇONNAGE DE STRATIFIÉ

(30) Priority: 12.10.2021 JP 2021167262
(43) Date of publication of application: 19.04.2023
(73) Proprietor: Mitsubishi Heavy Industries Compressor Corporation, Tokyo 108-0014 (JP)
(72) Inventor: SAKAI, Yasunori, Hiroshima, 733-8553 (JP); YAMAUCHI, Daisuke, Hiroshima, 733-8553 (JP); HAYASHIDA, Naoya, Hiroshima, 733-8553 (JP)
(74) Representative: Studio Torta S.p.A.

(56) References cited:
- EP-A1- 3 778 237
- EP-A1- 3 868 505
- US-A1- 2019 134 732

## Description

### BACKGROUND OF THE INVENTION

### Field of the Invention

The present disclosure relates to a laminate shaping method.

### Description of Related Art

For example, Japanese Unexamined Patent Application, First Publication No. 2019-84553 discloses a configuration in which metal layers formed of weld beads formed by arc welding are sequentially laminated as a laminate shaping method for shaping a three-dimensional shaped object.

### [Citation List]

### [Patent Document]

[Patent Document 1]
   Japanese Unexamined Patent Application, First Publication No. 2019-84553
[Patent Document 2]
   EP 3 778 237 A discloses the preamble of independent claim 1.

### SUMMARY OF THE INVENTION

However, in the configuration as disclosed in Japanese Unexamined Patent Application, First Publication No. 2019-84553, in a case where the thickness of the metal layer that has already been laminated is small, when a new metal layer is laminated by arc welding, an end portion of the metal layer that has already been laminated may melt and sag along with the new metal layer. This is because the metal layer that has already been laminated is melted by the influence of the heat of a welding material that is in a molten state to laminate the new metal layer. Such a phenomenon has a significant influence on the end portion of the metal layer. As a result, in the process of laminating the metal layer, there are cases where the shape of the side surface which is the end portion of the metal layer collapses due to the sagging, and the next metal layer cannot be accurately laminated.

The present disclosure provides a laminate shaping method in which a three-dimensional shaped object can be formed with good quality by suppressing the influence of sagging when metal layers are laminated by welding.

Claim 1 defines the method according to the invention.

According to the laminate shaping method of the present disclosure, it is possible to form a three-dimensional shaped object with good quality by suppressing the influence of sagging when metal layers are laminated by welding.

### BRIEF DESCRIPTION OF THE DRAWINGS

FIG. 1 is a cross-sectional view parallel to an axis showing an example of a shaped object shaped in a laminate shaping method according to the embodiment of the present disclosure.
FIG. 2 is a flowchart showing the order of the laminate shaping method.
FIG. 3 is a semi-cross-sectional view parallel to the axis showing a state in which a laminate shaped portion having a predetermined height is formed in a step of forming a laminate shaped portion of the laminate shaping method.
FIG. 4 is a semi-cross-sectional view parallel to the axis showing a state in which a receiving portion and a processed side surface are formed in the laminate shaped portion in a step of forming a processed side surface of the laminate shaping method.
FIG. 5 is a semi-cross-sectional view parallel to the axis showing a state in which a new laminate shaped portion is formed by laminating a metal layer on the receiving portion in a step of forming a laminate shaped portion in second and subsequent unit steps in the laminate shaping method.
FIG. 6 is a semi-cross-sectional view parallel to the axis showing a state in which a receiving portion and a processed side surface are formed in the new laminate shaped portion in the step of forming a laminate shaped portion in the second and subsequent unit steps in the laminate shaping method.
FIG. 7 is a semi-cross-sectional view parallel to the axis showing a state in which a shaped product is formed in a step of performing final processing of the laminate shaping method.

### DETAILED DESCRIPTION OF THE INVENTION

Hereinafter, an embodiment for carrying out a laminate shaping method according to the present disclosure will be described with reference to the accompanying drawings.

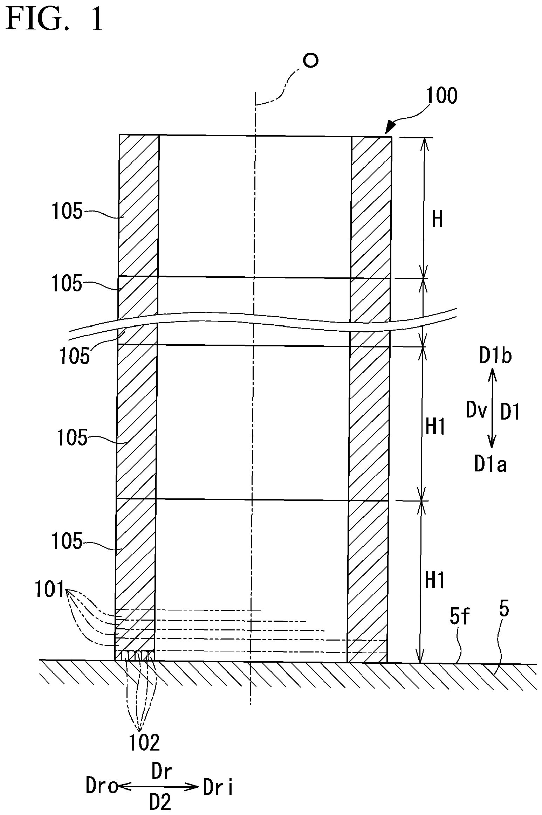

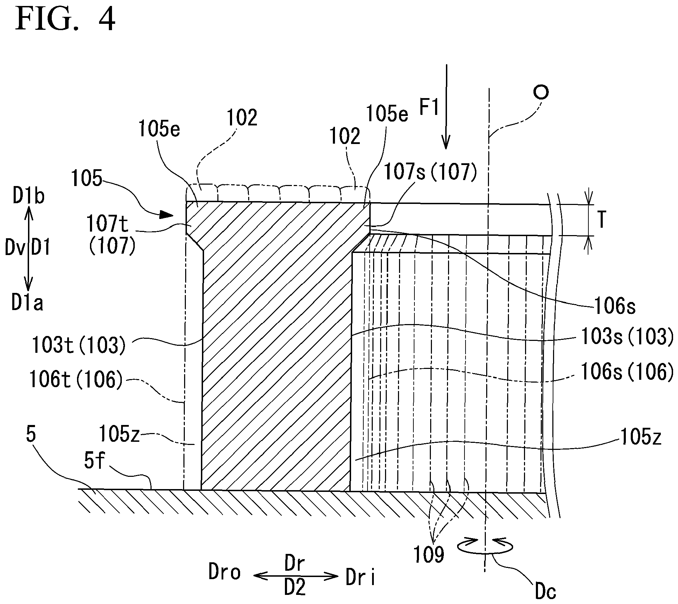

As shown in FIG. 1, in a laminate shaping method S10 in the embodiment of the present disclosure, a three-dimensional shaped object 100 is shaped. The shaped object 100 shaped in the laminate shaping method S10 of the present embodiment is a component forming a rotating machine such as a turbine or a compressor. More specifically, as the shaped object 100 to be shaped, there are a nozzle, an impeller, and a casing. In the present embodiment, as the shaped object 100, a cylindrical nozzle extending in a first direction D1 centered on an axis O is shaped. A fluid which is a gas such as steam or air can flow through the inside of the nozzle (the shaped object 100) after completion as a working fluid so that the first direction D1 is a flow direction F1 (see FIG. 4).

In the laminate shaping method S10, a plurality of metal layers 101 are laminated on a support surface 5f of a table 5, and the shaped object 100 having a predetermined shape is shaped. The laminate shaping method S10 is carried out by a numerical control (NC) processing machine to which a welding torch and a processing tool are attached. One metal layer 101 consists of weld beads 102. The weld beads 102 are generated by arc welding performed by the welding torch of the NC processing machine. The support surface 5f of the table 5 forms a surface orthogonal to the first direction D1. In the present embodiment, the first direction D1 is set to coincide with a vertical direction Dv. Accordingly, the plurality of metal layers 101 are laminated on the support surface 5f from a first side D1a (a side approaching the support surface 5f with respect to the metal layer 101) toward a second side D1b (a side away from the support surface 5f with respect to the metal layer 101) in the first direction D1. That is, the first direction D1 is the direction in which the metal layers 101 are laminated. The first direction D1 may be a direction inclined with respect to the vertical direction Dv as long as the first direction D1 is not orthogonal to the vertical direction Dv.

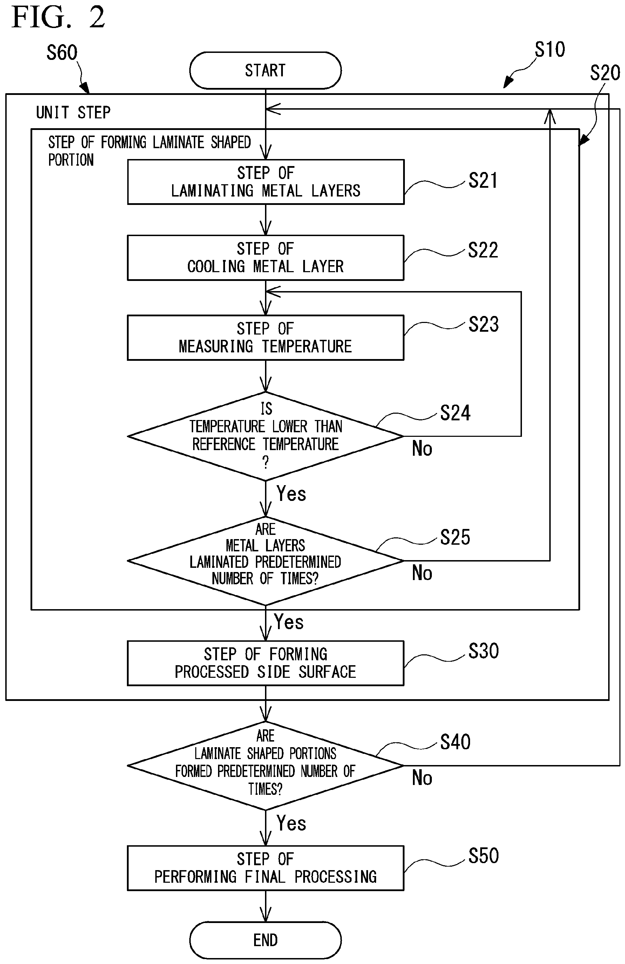

As shown in FIG. 2, the laminate shaping method S10 of the present embodiment mainly includes a step S20 of forming a laminate shaped portion 105, a step S30 of forming a processed side surface 103, a step S40 of determining the number of times the laminate shaped portion 105 is formed, and a step S50 of performing final processing.

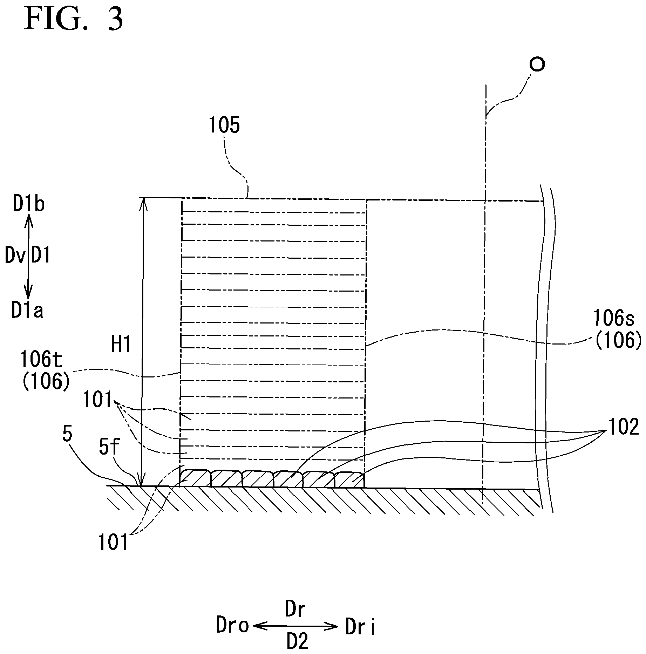

As shown in FIG. 3, in the step S20 of forming the laminate shaped portion 105, the laminate shaped portion 105 having a predetermined height H1 in the first direction D1 is formed. The laminate shaped portion 105 constitutes a part of a region of the shaped object 100. As shown in FIG. 2, the step S20 of forming the laminate shaped portion 105 includes a step S21 of laminating the metal layer 101, a step S22 of cooling the metal layer 101, a step S23 of measuring a temperature, a step S24 of determining the temperature, and a step S25 of determining the number of laminated layers. In the step S20 of forming the laminate shaped portion 105, the step S21 of laminating the metal layer 101, the step S22 of cooling the metal layer 101, the step S23 of measuring the temperature, the step S24 of determining the temperature, and the step S25 of determining the number of laminated layers are repeated a preset number of times. In the step S20 of forming the laminate shaped portion 105, a predetermined number of metal layers 101 are laminated in the first direction D1 to form the laminate shaped portion 105 having the predetermined height H1. The laminate shaped portion 105 having the predetermined height H1 has a shaped portion side surface 106 facing a second direction D2 intersecting the first direction D1 in a cross section parallel to the axis O. In the present embodiment, the laminate shaped portion 105 is formed in a cylindrical shape extending in the first direction D1. In addition, the second direction D2 of the present embodiment is a direction orthogonal to the first direction D1 and is a radial direction (width direction) Dr of the laminate shaped portion 105. Therefore, the laminate shaped portion 105 has, as the shaped portion side surface 106, an inner shaped portion side surface 106s facing an inside Dri in the radial direction Dr (second direction D2) and an outer shaped portion side surface 106t facing an outside Dro in the radial direction Dr. That is, the inner shaped portion side surface 106s is the inner circumferential surface of the laminate shaped portion 105 facing the axis O in the radial direction Dr. In addition, the outer shaped portion side surface 106t is the outer circumferential surface of the laminate shaped portion 105 facing the side opposite to the axis O in the radial direction Dr.

As shown in FIG. 3, in the step S21 of laminating the metal layers 101, the metal layers 101 formed of the weld beads 102 formed by arc welding are laminated. In the step S21 of laminating the metal layers 101, first, the weld beads 102 are formed on the support surface 5f of the table 5 by arc welding. In the step S21 of laminating the metal layers 101, the weld beads 102 are formed based on shape data of the shaped object 100 input in advance. In the step S21 of laminating the metal layers 101 of the present embodiment, a plurality of passes of weld beads 102 are continuously formed by arc welding in the second direction D2 orthogonal to the first direction D1 to constitute one metal layer 101. In the step S21 of laminating the metal layers 101, it is preferable to form the weld beads 102 by high-speed welding such as rotary arc welding.

The metal layer 101 is not limited to the plurality of passes of weld beads 102 constituting one layer as in the present embodiment, for example, and only one pass of the weld bead 102 may constitute one layer.

In the step S22 of cooling the metal layer 101, a cooling medium is supplied to the surface of the uppermost metal layer 101 laminated in the step S21 of laminating the metal layers 101 to cool the metal layer 101. The uppermost metal layer 101 is the metal layer 101 located closest to the second side D1b in the first direction D1. That is, the uppermost metal layer 101 is the metal layer 101 that forms the top portion of the laminate shaped portion 105. In the step S22 of cooling the metal layer 101 of the present embodiment, the cooling medium in a liquid form is directly supplied to the surface of the uppermost metal layer 101. In the step S22 of cooling the metal layer 101, for example, cutting oil or air is supplied as the cooling medium. Accordingly, when the step S21 of laminating the metal layers 101 is repeated, the new metal layer 101 is laminated on the surface of the uppermost metal layer 101 cooled in the step S22 of cooling the metal layer 101.

In the step S22 of cooling the metal layer 101 of the present embodiment, for example, the uppermost metal layer 101 may be subjected to processing other than cooling. For example, in the step S22 of cooling the metal layer 101, impurities on the surface of the uppermost metal layer 101 laminated in the step S21 of laminating the metal layers 101 may be removed. Impurities are removed by scraping off impurities adhering to the surface and the periphery of the metal layer 101 with a cutting tool or a polishing tool attached to the NC processing machine as a processing tool. Here, the impurities are foreign substances that are generated on and around the surface of the weld bead 102 and cause welding defects. Specifically, as the impurities, there are spatter, slag, and fume. The spatter is metal particles scattered around the weld bead 102. The slag is a foreign substance formed of an intermetallic compound generated from base metal or a welding material. Specific examples of the slag include glassy slag having a low melting point. The fume is a mineral dust adhering to the periphery of the weld bead 102. Fume contains components included in the base metal and welding material, but the ratio of each component is significantly different from that of the original material.

In the step S23 of measuring the temperature, the temperature of the surface of the uppermost metal layer 101 laminated in the step S21 of laminating the metal layers 101 is measured. In the step S23 of measuring the temperature, temperature information on the surface of the metal layer 101 is acquired without touching the metal layer 101 by using a thermosensor or a non-contact thermometer. The acquired temperature information is sent to a control device (not shown) to be displayed on a monitor, or used for processing with an NC processing machine.

In the step S24 of determining the temperature, it is determined whether or not the measured temperature of the surface of the metal layer 101 is lower than a predetermined reference temperature. Here, the reference temperature is a temperature at which weld beads 102 can be newly formed on the metal layer 101 without causing a deterioration in welding quality, and is a temperature at which the cooling medium supplied to the surface of the metal layer 101 is regarded as evaporating. Therefore, the reference temperature is, for example, about 100°C. In the step S24 of determining the temperature, in a case where it is determined that the measured temperature is lower than the reference temperature, the process proceeds to the step S25 of determining the number of laminated layers. In addition, in the step S24 of determining the temperature, in a case where it is determined that the temperature measured in the step S23 of measuring the temperature exceeds the reference temperature, the step S23 of measuring the temperature is performed again after a predetermined time has elapsed.

In the step S25 of determining the number of laminated layers, it is determined whether or not the metal layers 101 are laminated a predetermined number of times. Here, the predetermined number of times is the number of metal layers 101 required to form the laminate shaped portion 105 having the predetermined height H1, and is determined based on the shape data of the shaped object 100. In the step S25 of determining the number of laminated layers, in a case where it is determined that the metal layers 101 are not laminated a predetermined number of times, the process returns to the step S21 of laminating the metal layers 101. In the step S21 of laminating the metal layers 101 after the step S25 of determining the number of laminated layers, a new metal layer 101 is formed on the metal layer 101 of which the temperature is measured. In the step S25 of determining the number of laminated layers, in a case where it is determined that the metal layers 101 are laminated a predetermined number of times, the process proceeds to the step S30 of forming the processed side surface 103.

In the step S30 of forming the processed side surface 103, the shaped portion side surface 106 is cut with respect to the laminate shaped portion 105 formed with the predetermined height H1. As shown in FIG. 4, in the step S30 of forming the processed side surface 103, at least a part of the shaped portion side surface 106 is cut in the laminate shaped portion 105 to form the processed side surface 103.

The processed side surface 103 is formed by cutting the shaped portion side surface 106 by a predetermined dimension so as to be recessed in the radial direction Dr. The processed side surface 103 is formed as a smooth surface having a surface roughness smaller than that of the shaped portion side surface 106. The processed side surface 103 is formed by removing an excess thickness portion 105z of the laminate shaped portion 105. The excess thickness portion 105z is a portion formed in a region larger than the shape of the shaped object 100 in the laminate shaped portion 105, and is a portion including sagging generated during welding. In addition, the processed side surface 103 of the present embodiment constitutes a side surface as a product. That is, the processed side surface 103 is a part of the inner circumferential surface and the outer circumferential surface of the shaped object 100 in the cross section parallel to the axis O.

In the present embodiment, in the laminate shaped portion 105, an inner processed side surface 103s is formed on the inner shaped portion side surface 106s facing the inside Dri in the radial direction Dr. In addition, in the present embodiment, an outer processed side surface 103t is further formed on the outer shaped portion side surface 106t facing the outside Dro in the radial direction Dr.

In the step S30 of forming the processed side surface 103, the processed side surface 103 is formed so that a receiving portion 107 projecting in the second direction D2 with respect to the processed side surface 103 is left at an end portion 105e on the second side D1b of the uppermost layer of the laminate shaped portion 105 in the first direction D1. The end portion 105e is a corner portion of the uppermost layer of the laminate shaped portion 105. In the present embodiment, the receiving portion 107 includes an inner receiving portion 107s projecting from the inner processed side surface 103s toward the inside Dri in the radial direction Dr, and an outer receiving portion 107t projecting from the outer processed side surface 103t toward the outside Dro in the radial direction Dr.

A thickness T of the receiving portion 107 in the first direction D1 is preferably equal to or larger than the penetration dimension of the weld beads 102 with respect to the receiving portion 107. The thickness T of the receiving portion 107 is preferably, for example, twice or more and five times or less with respect to the penetration dimension of the weld beads 102. The penetration dimension is the length in the first direction D1 of the portion that melts when the weld bead is formed. The receiving portion 107 of the present embodiment is formed to leave the shaped portion side surface 106 at least partially in the first direction D1. The receiving portion 107 may be formed without leaving the shaped portion side surface 106.

The inner receiving portion 107s is formed so that the thickness T gradually decreases from the outside Dro toward the inside Dri in the radial direction Dr. The outer receiving portion 107t is formed so that the thickness T gradually decreases from the inside Dri toward the outside Dro in the radial direction Dr. The thickness T of the inner receiving portion 107s and the outer receiving portion 107t in the radial direction Dr may be constant. It is preferable that the cross-sectional shapes of the inner receiving portion 107s and the outer receiving portion 107t parallel to the axis O may be shapes close to line symmetry.

In the step S30 of forming the processed side surface 103, it is that the shaped portion side surface 106 is cut while the tool is moved in the first direction D1 by the NC processing machine when the processed side surface 103 is formed. That is, the processed side surface 103 is formed by cutting the shaped portion side surface 106 in the flow direction F1. Accordingly, a plurality of processing marks 109 extending in the first direction D1 are formed on the processed side surface 103 in a circumferential direction Dc centered on the axis O. Accordingly, the processing marks 109 are in a state of extending along the flow direction F1 of the fluid flowing through the inside of the shaped object 100 after completion.

Here, after the step S30 of forming the processed side surface 103 is completed, the shape (dimensions) of the formed processed side surface 103 may be measured. The shape of the processed side surface 103 is measured by contact or in a non-contact manner using, for example, a three-dimensional measuring device. Specifically, in a case of measuring the shape of the processed side surface 103 in a non-contact manner, for example, a laser beam, a pattern light, or an arc sensor is used. In a case of measuring the shape of the processed side surface 103 by contact, for example, a touch sensor is used. After measuring the shape of the processed side surface 103, it is determined whether or not the measured shape of the processed side surface 103 deviates from a predetermined reference. Here, the predetermined reference is determined according to the dimensions that can be tolerated for the shape of the final shaped object 100. Examples of the reference include a value considering a certain dimensional tolerance in the shape data of the shaped object 100. In a case where it is determined that the shape of the processed side surface 103 deviates from the reference, additional processing may be performed until the shape does not deviate from the reference.

In this manner, in the step S30 of forming the processed side surface 103, the inner processed side surface 103s and the outer processed side surface 103t are formed, so that one unit step S60 is completed. As shown in FIG. 2, the unit step S60 is a step including the step S20 of forming the laminate shaped portion 105 and the step S30 of forming the processed side surface 103. In the laminate shaping method S10, the unit step S60 is repeatedly performed. When one unit step S60 is completed, the process proceeds to step S40 of determining the number of times the laminate shaped portion 105 is formed.

In the step S40 of determining the number of times the laminate shaped portion 105 is formed, it is determined whether or not the laminate shaped portion 105 is formed a predetermined number of times. Here, the predetermined number of times is the number of laminate shaped portions 105 required to form the shaped object 100, and is determined based on the shape data of the shaped object 100. In the step S40 of determining the number of times the laminate shaped portion 105 is formed, in a case where it is determined that the laminate shaped portion 105 is not formed the predetermined number of times, the unit step S60 is repeated. In the step S40 of determining the number of times the laminate shaped portion 105 is formed, in a case where it is determined that the laminate shaped portion 105 is formed the predetermined number of times, the process proceeds to step S50 of performing final processing.

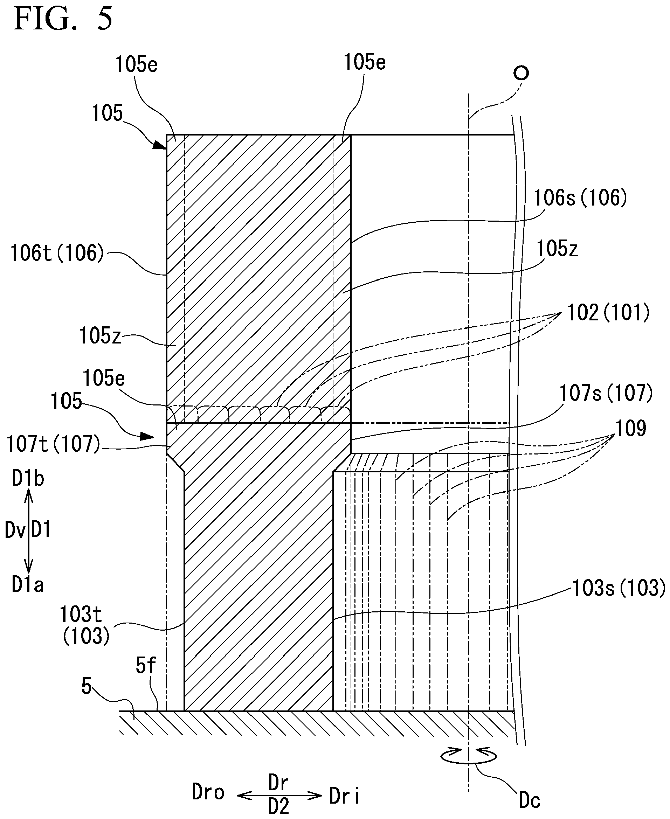

In a case where the unit step S60 is repeated, the process returns to the step S21 of laminating the metal layers 101. As shown in FIG. 5, when the unit step S60 is repeated (when the second and subsequent unit steps S60 are performed), in the step S20 of forming the laminate shaped portion 105, a new metal layer 101 is laminated so as to overlap the upper surface (the surface of the uppermost layer) of the receiving portion 107 in the first direction D1. Specifically, the metal layer 101 newly formed when the laminate shaped portion 105 is additionally formed is formed so as to overlap the receiving portion 107 with respect to the surface of the uppermost metal layer 101 of the laminate shaped portion 105 that has already been formed. The receiving portion 107 projects in the second direction D2 with respect to the processed side surface 103. Therefore, by sequentially laminating the metal layers 101 of the newly additionally formed laminate shaped portion 105, the excess thickness portion 105z of the additionally formed laminate shaped portion 105 is formed on the receiving portion 107. When the new metal layer 101 is laminated on the upper surface of the receiving portion 107, the heat energy due to the penetration of the weld beads 102 in a portion forming the excess thickness portion 105z and the heat of the weld beads 102 themselves is absorbed by the receiving portion 107.

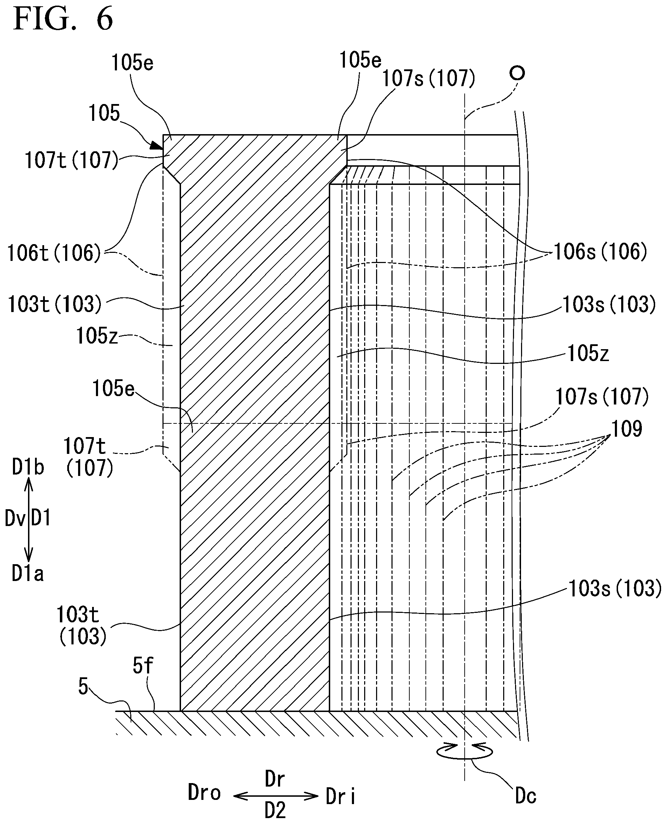

In addition, in the step S30 of forming the processed side surface 103 in the second and subsequent unit steps S60, the shaped portion side surface 106 is cut with respect to the newly formed laminate shaped portion 105. In this case, as shown in FIG. 6, the processed side surface 103 is formed on the end portion 105e of the newly formed laminate shaped portion 105 so that the receiving portion 107 projecting in the second direction D2 is newly left. Furthermore, the receiving portion 107 of the laminate shaped portion 105 that has already been formed is cut. Accordingly, the processed side surface 103 (the inner processed side surface 103s and the outer processed side surface 103t) of the laminate shaped portion 105 that has already been formed and the processed side surface 103 (the inner processed side surface 103s and the outer processed side surface 103t) of the newly formed laminate shaped portion 105 are formed as a smooth surface that is continuous in the first direction D1.

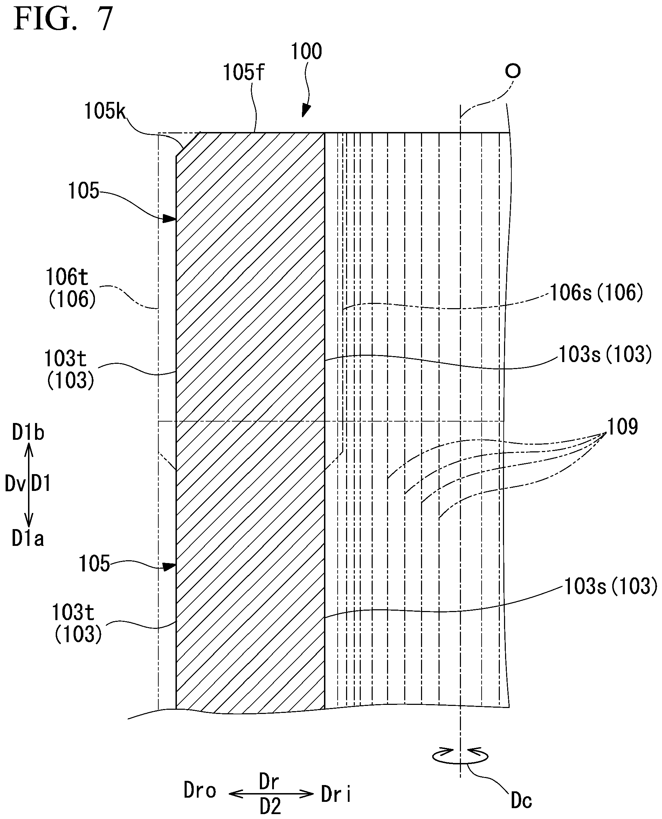

In the step S50 of performing the final processing performed after the laminate shaped portion 105 is laminated the predetermined number of times, as shown in FIG. 7, the shaped portion side surface 106 (the inner shaped portion side surface 106s and the outer shaped portion side surface 106t) of the laminate shaped portion 105 that is formed finally and is located closest to the second side D1b in the first direction D1 is cut to form the processed side surface 103 (the inner processed side surface 103s and the outer processed side surface 103t). In this case, it is not necessary to form the receiving portion 107 in the finally formed laminate shaped portion 105. Accordingly, the processed side surface 103 of the laminate shaped portion 105 that has already been formed and the processed side surface 103 of the laminate shaped portion 105 that is finally formed form a continuous smooth surface in the first direction D1.

In the step S50 of performing the final processing, the surface (the upper surface of the shaped object 100) of the laminate shaped portion 105 located closest to the second side D1b in the first direction D1 may be cut to form a flat surface 105f orthogonal to the first direction D1. In addition, in the step S50 of performing the final processing, the corner portion of the shaped object 100 may be subjected to processing such as forming a beveled portion 105k for welding the shaped object 100 to another component. Furthermore, in the step S50 of performing the final processing, finishing may be performed on the outer processed side surface 103t with a predetermined processing accuracy so as to further reduce the surface roughness of the outer processed side surface 103t facing the outside Dro in the radial direction Dr of the plurality of laminate shaped portions 105 that are laminated. When the step S50 of performing the final processing is completed, the shaping of the shaped object 100 having the predetermined dimensions is completed.

### (Actions and Effects)

In the laminate shaping method S 10 having the above configuration, in the step S30 of forming the processed side surface 103, the processed side surface 103 is formed so that the receiving portion 107 is left at the uppermost layer of the laminate shaped portion 105. The receiving portion 107 projects in the second direction D2 with respect to the processed side surface 103. When the unit step S60 is repeated, the new metal layer 101 is laminated on the receiving portion 107, so that the heat energy due to the penetration of the weld beads 102 and the thermal effect of the weld beads 102 can be absorbed by the receiving portion 107 during the lamination of the weld beads 102. Accordingly, the receiving portion 107 can suppress collapse of the shape of the processed side surface 103 due to adhesion of sagging of molten metal to the processed side surface 103. As a result, it is possible to suppress the influence of sagging of the metal during the lamination of the metal and form a three-dimensional shaped object 100 with good quality.

The metal layers 101 are laminated in the first direction D1 to form the laminate shaped portion 105. The processed side surface 103 is formed by cutting the shaped portion side surface 106 for each of the formed laminate shaped portions 105. The laminate shaped portions 105 are sequentially laminated in the first direction D1 by repeatedly performing the unit step S60. Here, in a state where a plurality of the laminate shaped portions 105 are laminated in the first direction D1 and are close to the shape of the final shaped object 100, it may be difficult for the tool for processing to access the shaped portion side surface 106. However, in the present embodiment, the processed side surface 103 is formed for each of the formed laminate shaped portions 105. That is, since the shaped portion side surface 106 of the laminate shaped portion 105 is cut for each unit step S60, it does not become difficult for the tool to access the shaped portion side surface 106. As a result, all the side surfaces of the shaped object 100, which is the final finished product, can be formed into the processed side surface 103 having the intended shape.

By causing the thickness T of the receiving portion 107 in the first direction D1 to be equal to or larger than the penetration dimension of the weld beads 102 with respect to the receiving portion 107, the heat energy due to the penetration of the weld beads 102 and the heat of the weld beads 102 themselves can be sufficiently absorbed by the receiving portion 107. As a result, it is possible to stably suppress the adhesion of the metal sagging during the formation of the metal layer 101 to the processed side surface 103. Therefore, the processed side surface 103 that has already been formed can be maintained in the intended shape, and the three-dimensional shaped object 100 can be formed with better quality.

In addition, by forming the receiving portion 107 with the shaped portion side surface 106 left, it is possible to secure a certain thickness in the receiving portion 107 from the root to the tip end portion of the receiving portion 107 in the second direction D2. As a result, the weld beads 102 forming the new metal layer 101 can be stably received by the receiving portion 107. Accordingly, it is possible to more effectively suppress the occurrence of metal sagging during the lamination of the metal.

The shaped object 100 has a cylindrical shape. The inner processed side surface 103s is formed on the inner shaped portion side surface 106s of the laminate shaped portion 105 for each unit step S60. Accordingly, even in the shaped object 100 having a cylindrical shape, it is possible to satisfactorily process the inner circumferential surface of the shaped object 100 while suppressing an obstacle to access of tools or the like. Similarly, the outer processed side surface 103t is formed on the outer shaped portion side surface 106t facing the outside Dro in the radial direction Dr of the shaped object 100. Accordingly, it is possible to satisfactorily process the outer circumferential surface of the shaped object 100 having a cylindrical shape together with the inner processed side surface 103s.

The surface of the uppermost metal layer 101 is cooled. By the cooling, the temperature of the uppermost metal layer 101 is lowered. In a case where the metal layers 101 are laminated, there is a possibility that lamination of the new metal layer 101 on the metal layer 101 in a state where the temperature is too high may cause deterioration of the welding quality. However, by cooling the uppermost metal layer 101, it is possible to prevent the new metal layer 101 from being laminated on the metal layer 101 in a high temperature state. Furthermore, compared to a case where the metal layer 101 is simply left to cool, the welding waiting time until the start of the formation of a new metal layer 101 can be shortened.

By measuring the temperature of the uppermost metal layer 101 in the step S23 of measuring the temperature, it is possible to prevent the new metal layer 101 from being laminated on the metal layer 101 having a high temperature with high accuracy. Therefore, deterioration of the welding quality of the new metal layer 101 can be stably suppressed. Accordingly, it is possible to further suppress a decrease in the strength of the finally manufactured shaped object 100.

In the step S30 of forming the processed side surface 103, the shaped portion side surface 106 is cut along the flow direction of the fluid flowing through the shaped object 100. Accordingly, the processing marks 109 formed on the processed side surface 103 are formed along the flow direction F1 of the fluid flowing through the shaped object 100. By causing the processing marks 109 to follow the flow of the fluid, when the fluid flows, the processing marks 109 make it difficult for turbulence such as a vortex to occur. Accordingly, the influence of the processing marks 109 on the flow of the fluid can be suppressed. Therefore, even if the surface state of the processing marks 109 is slightly rough, it is difficult for a loss to occur in the flow of the fluid. Accordingly, it is possible to perform the processing for forming the processed side surface 103 more easily and in a short period of time.

In the above embodiment, in the laminate shaping method S10, the receiving portions 107 are formed on the shaped portion side surfaces 106 at both end portions in the second direction D2. Not according to the claimed invention, the receiving portion 107 may be formed only on the shaped portion side surface 106 on either one side of the second directions D2. In addition, in a case where the receiving portions 107 are formed on the shaped portion side surfaces 106 on both sides in the second direction D2, the receiving portions 107 are not limited to the structure in which the receiving portions 107 are formed in the same shape as in the present embodiment, but the shape and size of the receiving portions 107 may be changed depending on the formation position.

In the above embodiment, as the shaped object 100, a cylindrical shape is formed. Not according to the claimed invention, the shape and configuration of the shaped object 100 may employ, for example, another configuration as appropriate, such as a wall shape.

In the above embodiment, the outer processed side surface 103t is formed on the laminate shaped portion 105 having the predetermined height H1 for each unit step S60, but the outer processed side surface 103t is not limited thereto. Even if the shaped object 100 has a cylindrical shape, there is no problem in processing of the outer processed side surface 103t because the processing is performed from the outside Dro in the radial direction Dr. In such a case, the outer processed side surface 103t may not be formed whenever the laminate shaped portion 105 having the predetermined height H1 is formed (for each unit step S60), but the outer processed side surfaces 103t may be collectively formed in the step S50 of performing the final processing. Furthermore, even in a case where both the inner processed side surface 103s and the outer processed side surface 103t are formed in the step S30 of forming the processed side surface 103, the number of times the outer processed side surface 103t is formed may be smaller than the number of times the inner processed side surface 103s is formed.

It is not necessary to perform the step S22 of cooling the metal layer 101, the step S23 of measuring the temperature, and the step S24 of determining the temperature. The step S20 of forming the laminate shaped portion 105 is according to the claimed invention limited to forming a plurality of the metal layers 101. Not according to the claimed invention, in the step S21 of laminating the metal layers 101, only one metal layer 101 may be formed, and the step S30 of forming the processed side surface 103 may be performed.

### [Industrial applicability]

According to the laminate shaping method of the present disclosure, it is possible to form a three-dimensional shaped object with good quality by suppressing the influence of sagging when metal layers are laminated by welding.

### EXPLANATION OF REFERENCES

5 Table
5f Support surface
100 Shaped object
101 Metal layer
102 Weld bead
103 Processed side surface
103s Inner processed side surface
103t Outer processed side surface
105 Laminate shaped portion
105e End portion
105f Flat surface
105k Beveled portion
105z Excess thickness portion
106 Shaped portion side surface
106s Inner shaped portion side surface
106t Outer shaped portion side surface
107 Receiving portion
107s Inner receiving portion
107t Outer receiving portion
109 Processing mark
D1 First direction
D1a First side
D1b Second side
D2 Second direction
Dc Circumferential direction
Dr Radial direction
Dri Inside
Dro Outside
Dv Vertical direction
F1 Flow direction of a fluid
H1 Height of a laminate shaped portion
O Axis
S10 Laminate shaping method
S20 Step of forming a laminate shaped portion
S21 Step of laminating metal layers
S22 Step of cooling the metal layer
S23 Step of measuring a temperature
S24 Step of determining the temperature
S25 Step of determining the number of laminated layers
S30 Step of forming a processed side surface
S40 Step of determining the number of times the laminate shaped portion is formed
S50 Step of performing final processing
S60 Unit step
T Thickness

## Claims

1. A laminate shaping method (S10) of shaping a three-dimensional shaped object (100) formed by sequentially laminating a plurality of metal layers (101), the method comprising:
a unit step repeatedly performed, the unit step including
a step (S20) of forming a laminate shaped portion (105) by laminating metal layers (101) formed of weld beads (102), and
a step (S30) of forming a processed side surface (103) by cutting a shaped portion side surface of the laminate shaped portion (105) that faces a second direction (D2) intersecting a first direction (D1) in which the metal layers (101) are laminated,
wherein, in the step of forming the processed side surface (103), the shaped portion side surface (103) is cut so that a receiving portion (107) projecting in the second direction (D2) with respect to the processed side surface (103), the receiving portion (107) is formed at an uppermost layer of the laminate shaped portion (105) in the first direction (D1),
when the unit step is repeated, in the step (S20) of forming the laminate shaped portion, a new metal layer (101) is laminated so as to overlap an upper surface of the receiving portion (107) in the first direction,
**characterized in that** the shaped object (100) is formed in a cylindrical shape centered on an axis (O) extending in the first direction (D1) so as to allow a fluid to flow through an inside of the shaped object (100),
in the step (S30) of forming the processed side surface, an inner circumferential surface of the shaped object (100) facing toward an inside in a radial direction and an outer circumferential surface of the shaped object (100) facing toward an outside in a radial direction are formed by the processed side surfaces (103), and
the processed side surface (103) is formed by cutting the shaped portion side surface in a flow direction (F1) of the fluid flowing through the inside of the shaped object (100).

2. The laminate shaping method (S10) according to claim 1,
wherein a thickness of the receiving portion (107) in the first direction (D1) is equal to or larger than a penetration dimension of the weld beads into the receiving portion (107).

3. The laminate shaping method (S10) according to claim 1 or 2,
wherein the receiving portion (107) is formed to leave the shaped portion side surface at least partially in the first direction (D1).

4. The laminate shaping method (S10) according to any one of 1 to 3,
wherein, in the step (S20) of forming the laminate shaped portion, after cooling the metal layer by supplying a cooling medium to a surface of the metal layer forming the uppermost layer in the first direction (D1), the new metal layer is laminated on the surface of the metal layer after cooling.

## Patentansprüche

1. Laminatformungsverfahren (S10) zur Formung eines dreidimensional geformten Gegenstands (100), der durch aufeinanderfolgendes Laminieren einer Vielzahl von Metallschichten (101) gebildet wird, wobei das Verfahren umfasst:
einen wiederholt durchgeführten Einheitsschritt, wobei der Schritt Folgendes enthält einen Schritt (S20) des Bildens eines Laminatformteils (105) durch Laminieren von Metallschichten (101), die aus Schweißraupen (102) gebildet sind, und einen Schritt (S30) des Bildens einer bearbeiteten Seitenfläche (103) durch Schneiden einer Formteilseitenfläche des Laminatformteils (105), die einer zweiten Richtung (D2) zugewandt ist, die eine erste Richtung (D1) schneidet, in der die Metallschichten (101) laminiert sind,
wobei in dem Schritt des Bildens der bearbeiteten Seitenfläche (103) die Formteilseitenfläche (103) so geschnitten wird, dass ein Aufnahmeteil (107), der in der zweiten Richtung (D2) in Bezug auf die bearbeitete Seitenfläche (103) vorsteht, wobei der Aufnahmeabteil (107) an einer obersten Schicht des Laminatformteils (105) in der ersten Richtung (D1) ausgebildet ist,
wobei, wenn der Einheitsschritt wiederholt wird, in dem Schritt (S20) des Bildens des Laminatformteils eine neue Metallschicht (101) so laminiert wird, dass sie eine obere Fläche des Aufnahmeteils (107) in die erste Richtung überlappt,
**dadurch gekennzeichnet, dass** der geformte Gegenstand (100) eine zylindrische Form aufweist, die auf einer Achse (O) zentriert ist, die sich in der ersten Richtung (D1) erstreckt, so dass ein Fluid durch das Innere des geformten Objekts (100) fließen kann,
in dem Schritt (S30) des Bildens der bearbeiteten Seitenfläche eine innere Umfangsfläche des geformten Objekts (100), die in radialer Richtung nach innen zeigt und eine äußere Umfangsfläche des geformten Objekts (100), die in radialer Richtung nach außen zeigt, durch die bearbeiteten Seitenflächen (103) gebildet sind, und
die bearbeitete Seitenfläche (103) durch Schneiden der Formteilseitenfläche in einer Strömungsrichtung (F1) des durch das Innere des geformten Objekts (100) strömenden Fluids gebildet wird.

2. Laminatformungsverfahren (SIO) nach Anspruch 1, wobei eine Dicke des Aufnahmeteils (107) in der ersten Richtung (D1) gleich oder größer ist als das Eindringmaß der Schweißraupen in den Aufnahmeteil (107).

3. Laminatformungsverfahren (S10) nach Anspruch 1 oder 2, wobei der Aufnahmeteil (107) so geformt ist, dass er die Formteilseitenfläche zumindest teilweise in der ersten Richtung (D1) lässt.

4. Laminatformungsverfahren (S10) nach einem der Punkte 1 bis 3,
wobei in dem Schritt (S20) des Bildens des Laminatformteils nach dem Kühlen der Metallschicht durch Zuführen eines Kühlmittels auf eine Oberfläche der Metallschicht, die die oberste Schicht in der ersten Richtung (D1) bildet, die neue Metallschicht nach dem Abkühlen auf die Oberfläche der Metallschicht laminiert wird.

## Revendications

1. Procédé de façonnage de stratifié (S10) consistant à façonner un objet tridimensionnel (100) formé par stratification séquentielle d'une pluralité de couches métalliques (101), le procédé comprenant :
une étape unitaire exécutée de manière répétée, l'étape unitaire comportant
une étape (S20) consistant à former une partie façonnée en stratifié (105) par stratification des couches métalliques (101) formées de bourrelets de soudure (102), et
une étape (S30) consistant à former une surface latérale traitée (103) par découpage d'une surface latérale de la partie façonnée de la partie façonnée en stratifié (105) qui fait face à une seconde direction (D2) coupant une première direction (D1) dans laquelle les couches métalliques (101) sont stratifiées,
dans lequel, lors de l'étape de formation de la surface latérale traitée (103), la surface latérale de la partie façonnée (103) est découpée de sorte qu'une partie réceptrice (107) faisant saillie dans la seconde direction (D2) par rapport à la surface latérale traitée (103), la partie réceptrice (107) est formée sur une couche la plus supérieure de la partie façonnée en stratifié (105) dans la première direction (D1),
lorsque l'étape unitaire est répétée, à l'étape (S20) de formation de la partie façonnée en stratifié, une nouvelle couche métallique (101) est stratifiée de manière à chevaucher une surface supérieure de la partie réceptrice (107) dans la première direction,
**caractérisé en ce que** l'objet façonné (100) a une forme cylindrique centrée sur un axe (0) s'étendant dans la première direction (D1) de manière à permettre à un fluide de s'écouler à l'intérieur de l'objet façonné (100),
lors de l'étape (S30) de formation de la surface latérale traitée, une surface circonférentielle interne de l'objet façonné (100) faisant face vers l'intérieur dans une direction radiale et une surface circonférentielle externe de l'objet façonné (100) faisant face vers l'extérieur dans une direction radiale sont formées par les surfaces latérales traitées (103), et
la surface latérale traitée (103) est formée par découpe de la surface latérale de la partie façonnée dans une direction d'écoulement (F1) du fluide s'écoulant à l'intérieur de l'objet façonné (100).

2. Procédé de façonnage de stratifié (S10) selon la revendication 1,
dans lequel une épaisseur de la partie réceptrice (107) dans la première direction (D1) est supérieure ou égale à une dimension de pénétration des bourrelets de soudure dans la partie réceptrice (107) .

3. Procédé de façonnage de stratifié (S10) selon la revendication 1 ou 2,
dans lequel la partie réceptrice (107) est formée pour sortir de la surface latérale de la partie façonnée au moins partiellement dans la première direction (D1).

4. Procédé de façonnage de stratifié (S10) selon l'une quelconque des revendications 1 à 3,
dans lequel, à l'étape (S20) de formation de la partie façonnée en stratifié, après refroidissement de la couche métallique par l'apport d'un milieu de refroidissement à une surface de la couche métallique formant la couche la plus supérieure dans la première direction (D1), la nouvelle couche métallique est stratifiée sur la surface de la couche métallique après refroidissement.
